# EUROPÄISCHE PATENTSCHRIFT

(11) **EP 4 007 862 B1**
(45) Veröffentlichungstag und Bekanntmachung des Hinweises auf die Patenterteilung: **28.08.2024**
(21) Anmeldenummer: 20760830.8
(22) Anmeldetag: 20.08.2020
(51) Int. Cl.: F16H 7/12, B62M 9/16

(54) **RIEMEN-SPANNEINRICHTUNG**
BELT TENSIONING DEVICE
DISPOSITIF DE MISE EN TENSION DE COURROIE

(30) Priorität: 28.08.2019 DE 202019104710 U
(43) Veröffentlichungstag der Anmeldung: 08.06.2022
(73) Patentinhaber: RTI Sports GmbH, 56070 Koblenz (DE)
(72) Erfinder: CLAUSSEN, Justin, 53343 Wachtberg/Pech (DE); GRAEVE, Arndt, 56072 Koblenz (DE)
(74) Vertreter: dompatent von Kreisler Selting Werner - Partnerschaft von Patent- und Rechtsanwälten mbB
(86) Internationale Anmeldenummer: PCT/EP2020/073426
(87) Internationale Veröffentlichungsnummer: WO 2021/037692

(56) Entgegenhaltungen:
- EP-A1- 2 746 143
- WO-A1-03/064243
- WO-A1-03/064243
- CN-Y- 2 686 983
- DE-A1- 102017 006 045
- US-A- 5 618 240
- US-A1- 2014 235 388

## Beschreibung

Die Erfindung betrifft ein Fahrradrahmenelement mit einer Riemen-Spanneinrichtung für Antriebsriemen eines Fahrrads.

Antriebsriemen oder auch Antriebsketten für Fahrräder längen sich aufgrund der bei der Benutzung auftretenden Kräfte. Dies führt dazu, dass der Antriebsriemen oder alternativ die Antriebskette regelmäßig gespannt werden muss. Dies erfolgt bei herkömmlichen Fahrrädern, beispielsweise durch ein entsprechendes Verschieben der Hinterradachse. Um ein Nachjustieren bzw. Nachspannen zu vermeiden, sind auch automatische Spanneinrichtungen bekannt, bei denen über Federelemente eine Spannrolle auf den Riemen oder die Kette gedrückt wird, um diese unter möglichst gleicher Spannung zu halten.

Eine derartige Riemen-Spanneinrichtung ist beispielsweise aus US 2014/0235388 bekannt. Eine Spannrolle ist über ein Hebelelement im Bereich der Hinterradachse mit dem Ausfallende verbunden. Parallel zu dem Hebelelement ist in montiertem Zustand unterhalb des Hebelelements eine Zugfeder vorgesehen, durch die die Spannrolle von unten gegen den Riemen gedrückt wird. Die in US 2014/0235388 beschriebene Riemen-Spanneinrichtung weist den Nachteil auf, dass die Kräfte von der Feder nur zu einem geringen Teil auf die Spannrolle übertragen werden. Insofern muss eine relativ starke Feder eingesetzt werden. Ferner ist der Hebelmechanismus relativ kompliziert, um eine Zugfeder einsetzen zu können.

Eine weitere komplex aufgebaute Ketten-Spanneinrichtung ist aus US 3,640,44 bekannt. Die Spannrolle drückt hierbei von oben auf den oberen Teil der Kette. Über ein Hebelelement und ein Befestigungselement ist diese Spanneinrichtung am Sattelrohr befestigt. Ferner ist zwischen dem Hebelelement und dem Sattelrohr eine Zugfeder vorgesehen. Auch bei dieser Vorrichtung kann nur ein Teil der von der Zugfeder aufgebrachten Kraft auf die Kette übertragen werden.

Weitere Ausgestaltungen und Anordnungen von Spannelementen sind aus EP 2 746 143 bekannt. Die US 5 618 240 offenbart die Merkmale des Oberbegriffes des Anspruchs 1.

Aufgabe der Erfindung ist es, ein Fahrradrahmenelement mit einer Riemen-Spanneinrichtung für Antriebsriemen eines Fahrrads zu schaffen, mit der ein zuverlässiges Spannen eines Riemens erzielt werden kann.

Die Lösung der Aufgabe erfolgt erfindungsgemäß durch ein Fahrradrahmenelement mit einer Rahmen-Spanneinrichtung, gemäß Anspruch 1.

Die Riemen-Spanneinrichtung ist selbstverständlich nicht nur für Riemen, sondern alternativ auch für Ketten oder andere entsprechende Antriebselemente geeignet.

Im nachfolgenden wird die Erfindung anhand eines Antriebriemens erläutert.

Die erfindungsgemäße Spanneinrichtung ist für Antriebsriemen eines Fahrrads, insbesondere eines Fahrrads mit Elektromotor, besonders gut geeignet. Insbesondere bei Fahrrädern mit elektromotorischer Unterstützung ist ein kontinuierlich gespannter Riemen oder dergleichen vorteilhaft. Die erfindungsgemäße Riemen-Spanneinrichtung weist eine Spannrolle auf. In montiertem Zustand drückt die Spannrolle vorzugsweise gegen eine Außenseite des Riemens. Besonders bevorzugt ist es, dass die Spannrolle gegen eine Unterseite des Riemens, d.h. einen Teil des Riemens, drückt, auf den in Betrieb keine Zugkräfte durch das Treten oder den Elektromotor wirken. Die Spannrolle ist mit einem Schwenkhebel verbunden. Die Verbindung erfolgt hier insbesondere über ein Aufnahmeelement, das die Spannrolle drehend trägt. Bei dem Aufnahmeelement handelt es sich insbesondere um eine Achse oder Welle, die die Spannrolle trägt. Das Aufnahmeelement kann einstückig mit dem Schwenkhebel ausgebildet sein. Der Schwenkhebel ist über ein Halteelement schwenkbar am Rahmen mittelbar oder unmittelbar befestigt. Bei dem Halteelement kann es sich insbesondere um eine Schwenkachse handeln, um die der Schwenkhebel schwenkbar mit dem Fahrradrahmen, ggf. über ein Zwischenelement, befestigt ist. Ferner ist ein Spannelement vorgesehen, das sowohl mit dem Schalthebel als auch mit dem Fahrradrahmen mittelbar oder unmittelbar verbunden ist. Erfindungsgemäß ist das Spannelement derart angeordnet, dass es mit dem Schwenkhebel zwischen dem Aufnahmeelement für die Spannrolle und dem Halteelement für den Schwenkhebel mit dem Schwenkhebel verbunden ist. Hierdurch ist eine sehr gute Kraftübertragung von dem Spannelement auf den Schwenkhebel und somit auf die Spannrolle realisiert.

Besonders bevorzugt ist es, dass das Spannelement im Wesentlichen in der Mitte zwischen dem Halteelement und dem Aufnahmeelement angeordnet ist. Hierbei ist eine Abweichung von ± 10mm, insbesondere ± 5mm von der exakten Mitte möglich. Durch eine derartig, insbesondere mittige Verbindung, kann eine gute Kraftübertragung realisiert werden.

Das Spannelement insbesondere mit dem Sattelrohr unmittelbar oder mittelbar, insbesondere über ein Befestigungs- oder Halteelement, befestigt. In Fahrtrichtung erfolgt die Befestigung am Sattelrohr, insbesondere auf der Rückseite des Sattelrohrs.

Vorzugsweise handelt es sich bei dem Spannelement um ein elastisches Element, wobei das Spannelement ein elastisches Element aufweist und insbesondere als elastisches Element ausgebildet ist. Das Vorsehen eines elastischen Elements besteht darin, dass hierdurch ein selbstständiges automatisches Justieren erfolgt. Gegebenenfalls kann das Spannelement aber auch insbesondere zusätzlich zu dem elastischen Element eine justierbare Spanneinrichtung, eine Spannschraube oder dergleichen, aufweisen. Besonders bevorzugt ist es, dass das Spannelement eine Feder aufweist, sondern insbesondere als Feder ausgebildet ist. Gegebenenfalls kann eine derartige Feder mit einer Spannschraube zur Feinjustage verbunden sein. Vorzugsweise handelt es sich bei der Feder um eine Zugfeder, sodass das Spannelement eine Zugfeder aufweist und in besonders bevorzugter Form als Zugfeder ausgebildet ist.

Gemäß der Erfindung erstreckt sich in montiertem Zustand das Spannelement insbesondere ausgehend vom Sattelrohr nach unten und ist zwischen den beiden Kettenstreben angeordnet . Die Kettenstreben sind hierbei diejenigen Streben, die am Ausfallende zur Aufnahme der Hinterradachse dienen und üblicherweise im Bereich des Tretlagers mit dem Fahrradrahmen, beispielsweise schwenkbar oder fest verbunden sind. Hierdurch ist eine sehr zentrale geschützte Anordnung des Spannelements möglich.

In besonders bevorzugter Ausführungsform ist eine Längsachse des vorzugsweise als Zugfeder ausgebildeten Spannelements, im Wesentlichen senkrecht zu einer Längsachse des Schwenkhebels angeordnet. In montiertem Zustand ist es daher besonders bevorzugt, dass die Längsachse des Spannelements zur Längsachse des Schwenkhebels einen Winkel 90° ± 20°, insbesondere ± 15° und besonders bevorzugt ± 10°, aufweist. Die Längsachse des Spannelements entspricht der Kraft- bzw. Zugrichtung des Spannelements. Die Längsachse des Schwenkhebels ist vorzugsweise durch eine Verbindungslinie zwischen dem Aufnahmeelement und dem Halteelement ausgebildet. Da es sich bei dem Aufnahmeelement und dem Halteelement jeweils in bevorzugter Ausführungsform um Achsen oder Wellen handelt, ist die Verbindungslinie diejenige Linie, die die beiden Mittellinien des Aufnahmeelements sowie des Halteelements miteinander verbindet.

Insbesondere wenn die Spanneinrichtung für Antriebsriemen ausgebildet ist, ist es bevorzugt, dass die Spannrolle eine umlaufende Vertiefung bzw. Nut zur Aufnahme bzw. Führung des Riemens aufweist.

Des Weiteren ist es bevorzugt, dass das Aufnahmeelement der Spannrolle eine insbesondere fest mit dem Schwenkhebel verbundene Rollenachse aufweist, bzw. als Rollenachse ausgebildet ist. Hierdurch ist es auf einfache Weise möglich, eine Spannrolle, die insbesondere von einem Kugellager drehbar gehalten ist, anzuordnen. Vorzugsweise ist die Spannrolle seitlich neben dem Schwenkhebel angeordnet. In montiertem Zustand ist die vorzugsweise vorgesehene Rollenachse horizontal angeordnet. Insofern ist es bevorzugt, dass die Spannrolle einseitig gehalten ist.

Das Halteelement, über das der Schwenkhebel mittelbar oder unmittelbar mit dem Fahrradrahmen verbunden ist, weist insbesondere eine Schwenkachse auf. Vorzugsweise ist die Schwenkachse über zwei Lagerelemente schwenkbar gelagert. Bei den Lagerelementen kann es sich um Öffnungen handeln, wobei vorzugsweise fett geschmierte Lager vorgesehen sind. Besonders bevorzugt ist es, dass der Schwenkhebel zwischen den beiden Lagenelementen angeordnet ist, sodass auf dem Schwenkhebel wirkende Kräfte gut aufgenommen werden können und insbesondere ein verkippen des Schwenkhebels vermieden ist. Alternativ kann die Schwenkachse auch fest angeordnet sein und die Drehung zwischen dem Schwenkhebel und der Schwenkachse erfolgen, wobei es sodann bevorzugt ist, dass in einer Öffnung des Schwenkhebels ein entsprechendes Lageelement vorgesehen ist. Insbesondere ist der Schwenkhebel mittig unterhalb des Sattelrohrs angeordnet, sodass das Spannelement in montiertem Zustand in einer vertikalen Ebene verläuft. Insofern ist es bevorzugt, dass sowohl das Spannelement als auch der Schwenkhebel in der Fahrradmittenebene angeordnet ist. Die Fahrradmittenebene ist die vertikale Symmetrieebene des Fahrrads.

Des Weiteren ist es bevorzugt, dass das Halteelement, das insbesondere zweistückig ausgebildet ist und die Schwenkachse trägt, im Bereich eines Tretlager- und/oder Motorgehäuses angeordnet ist. Insbesondere ist das Halteelement mit einer Unterseite bzw. Hinterseite des Tretlager- und/oder Motorgehäuses fest verbunden.

Vorzugsweise weist eine Schwenkachse bzw. Mittelachse des Halteelements zur Drehachse des Tretlagers einen geringen Abstand auf. Besonders bevorzugt ist es, dass dieser Abstand im Bereich von 5 bis 15 cm, insbesondere 7 bis 12 cm liegt.

Des Weiteren betrifft die Erfindung ein Fahrradrahmenelement. Das Fahrradrahmenelement weist zumindest ein Sattelrohr und ein mit dem Sattelrohr verbundenes Tretlager- und/oder Motorgehäuse auf. Ferner kann das Fahrradrahmenelement die üblichen weiteren Elemente, wie Kettenstreben, Sattelstreben, Unterrohr, Oberrohr, Gabelrohr und dergleichen aufweisen. Bei dem erfindungsgemäßen Fahrradrahmenelement sind mit dem Sattelrohr und/oder dem Tretlager- und/oder Motorgehäuse ferner die beiden Kettenstreben verbunden. Des Weiteren ist erfindungsgemäß ein Riemenspannelement, wie vorstehend beschrieben, angeordnet und vorteilhaft weitergebildet.

Nachfolgend wird die Erfindung anhand einer bevorzugten Ausführungsform unter Bezugnahme auf die anliegenden Zeichnungen näher erläutert.

Es zeigen:
- Figuren 1: eine schematische Seitenansicht eines Fahrradrahmenelements mit montiertem Riemen-Spannelement,
- Figur 2: eine schematische Schnittansicht entlang der Linie II-II in Figur 1 und
- Figur 3: eine schematische Ansicht in Richtung des Pfeils III in Figur 1.

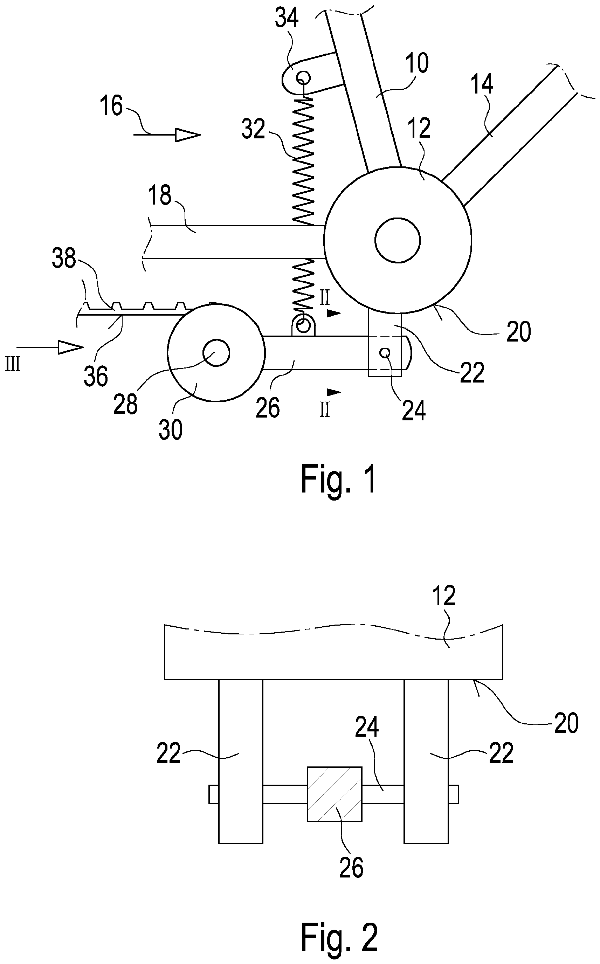

In der vereinfachten schematischen Darstellung eines Fahrradrahmenelements in Figur 1 ist ein Sattelrohr 10 mit einem Tretlager- und/oder Motorgehäuse 12 verbunden. Mit diesem ist ferner ein Unterrohr 14 eines Fahrradrahmenelements verbunden. Entgegen einer Fahrtrichtung 16 sind auf der Rückseite des Tretlager- und/oder Motorgehäuses 12 Kettenstreben 18 angeordnet, die im dargestellten Ausführungsbeispiel fest mit dem Tretlager- und/oder Motorgehäuse 12 verbunden sind.

An einer Unterseite 20 im rückwärtigen Bereich des Tretlager- und/oder Motorgehäuses 12 ist ein Verbindungselement 22 fest mit dem Tretlager- und/oder Motorgehäuse 12 verbunden. Über eine Schwenkachse 24 ist mit dem Halteelement 22 ein Schwenkhebel 26 schwenkbar verbunden. Der Schwenkhebel 26 trägt im dargestellten Ausführungsbeispiel über eine Schwenkachse 28 eine Spannrolle 30. Hierbei ist die Spannrolle 30 an dem entgegen der Fahrtrichtung 16 weisenden Ende des Schwenkhebels 26 mit diesem verbunden. Ferner ist in einem mittleren Bereich zwischen dem als Schwenkachse 24 ausgebildeten Halteelement und dem als Rollenachse 28 ausgebildeten Aufnahmeelement für die Spannrolle 30 ein Spannelement 32 angeordnet. Das im dargestellten Ausführungsbeispiel als Zugfeder ausgebildete Spannelement ist einerseits im mittleren Bereich des Schwenkhebels 26 mit diesem verbunden und andererseits über ein Halteelement 34 mit dem Sattelrohr 10 verbunden. Das Halteelement 34 ist hierbei bezogen auf eine Fahrtrichtung 36 an einer Rückseite des Sattelrohrs 10 angeordnet.

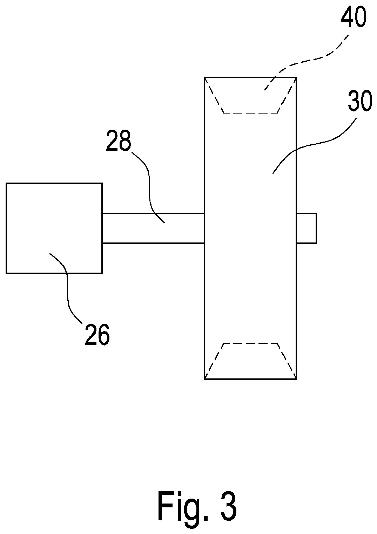

Die Spannrolle 30 drückt aufgrund der von der Feder 32 aufgebrachten Zugkraft gegen eine Unterseite 36 eines schematisch dargestellten Antriebriemens 38. Hierbei ist der Antriebsriemen 38 in einer Vertiefung oder Nut 40 (Figur 3) der Spannrolle 30 angeordnet.

Das als Zugfeder ausgebildete Spannelement 32 erzeugt eine Zugkraft in eine Richtung 33. Die Richtung 33 entspricht der Längsachse der Feder 32. In montiertem Zustand ist die Feder 32 derart angeordnet, dass die Längsachse 33 der Feder 32 im Wesentlichen senkrecht zu einer Längsachse 27 des Schwenkhebels 26 ist. Die Längsachse 27 ist eine Verbindungslinie zwischen der Mittel- bzw. Drehachse des die Spannrolle 30 tragenden Aufnahmeelements 28 sowie der Mittel- bzw. Drehachse des den Schwenkhebel 26 tragendenden Halteelements 24.

Die Schwenkachse 24 ist zweiseitig gelagert, bzw. fixiert (Figur 2). Insofern sind mit der Unterseite 20 des Tretlager- und/oder Motorgehäuses 12 zwei Halteelemente 22 angeordnet.

Vorzugsweise ist der Abstand zwischen der Schwenkachse 24 und einer Drehachse 21 des Tretlagers gering. Insbesondere liegt der Abstand im Bereich von 5 bis 15 cm und besonders bevorzugt im Bereich von 7 bis 12 cm. Diese tragen die Schwenkachse 24, wobei die Schwenkachse entweder fest mit den beiden Halteelementen 22 verbunden oder von diesen drehbar gehalten ist. In der Mitte zwischen den beiden Halteelementen 22 ist der Schwenkhebel 26 angeordnet.

Die Spannrolle 30 ist über die Rollenachse 28 einseitig gehalten, wobei vorzugsweise die Rollenachse 28 fest mit dem Schwenkhebel 26 verbunden ist und die Drehung der Spannrolle 30 am freien Ende, insbesondere durch Vorsehen eines Kugellagers erfolgt.

## Patentansprüche

1. Fahrradrahmenelement mit
einem Sattelrohr (10), einem mit dem Sattelrohr (10) verbundenen Tretlager- und/oder Motorgehäuse (12) und
mit dem Sattelrohr (10) und/oder dem Tretlager- und/oder Motorgehäuse (12) verbundenen Kettenstreben (18) sowie
einer Riemen-Spanneinrichtung für Antriebsriemen eines Fahrrads, mit einer Spannrolle (30),
einem die Spannrolle (30) mittels eines Aufnahmeelements (28) drehbar tragenden Schwenkhebels (26),
einem dem Schwenkhebel (26) schwenkbar tragenden Halteelement (24), das am Fahrradrahmen befestigbar ist und
einem mit dem Schwenkhebel (26) und dem Fahrradrahmen verbundenen Spannelement (32),
wobei das Spannelement (32) mit dem Schwenkhebel (26) zwischen dem Halteelement (24) und dem Aufnahmeelement (28) verbunden ist **dadurch gekennzeichnet, dass**
das Spannelement (32) in montiertem Zustand zwischen Kettenstreben (18) und
am Fahrradrahmen am Sattelrohr (10), insbesondere auf einer Rückseite des Sattelrohrs (10) angeordnet ist.

2. Fahrradrahmenelement nach Anspruch 1, **dadurch gekennzeichnet, dass** das Spannelement (32) in der Mitte zwischen dem Halteelement (24) und dem Aufnahmeelement (28), insbesondere mit einer Abweichung von der Mitte von weniger als ± 10mm, vorzugsweise weniger als ± 5mm befestigt ist.

3. Fahrradrahmenelement nach einem der Ansprüche 1 bis 2, **dadurch gekennzeichnet, dass** das Spannelement (32) ein elastisches Element aufweist, insbesondere als elastisches Element ausgebildet ist.

4. Fahrradrahmenelement nach einem der Ansprüche 1 bis 3, **dadurch gekennzeichnet, dass** das Spannelement (32) eine Feder, insbesondere eine Zugfeder, aufweist, wobei das Spannelement (32) vorzugsweise als Feder, insbesondere als Zugfeder ausgebildet ist.

5. Fahrradrahmenelement nach einem der Ansprüche 1 bis 4, **dadurch gekennzeichnet, dass** das Spannelement (32) auf einer Rückseite des Sattelrohrs (10) angeordnet ist.

6. Fahrradrahmenelement nach einem der Ansprüche 1 bis 5, **dadurch gekennzeichnet, dass** eine Längsachse (33) des Spannelements (32) im wesentlichen senkrecht zu einer Längsachse (27) des Schwenkhebels (26) verläuft.

7. Fahrradrahmenelement nach einem der Ansprüche 1 bis 6, **dadurch gekennzeichnet, dass** die Spannrolle (30) eine umlaufende Vertiefung (40) zur Aufnahme eines Riemens aufweist.

8. Fahrradrahmenelement nach einem der Ansprüche 1 bis 7, **dadurch gekennzeichnet, dass** das Aufnahmeelement (28) der Spannrolle (30) eine insbesondere fest mit dem Schwenkhebel (26) verbundene Rollenachse (28) aufweist.

9. Fahrradrahmenelement nach einem der Ansprüche 1 bis 8, **dadurch gekennzeichnet, dass** die Spannrolle (30) seitlich neben dem Schwenkhebel (26) angeordnet ist.

10. Fahrradrahmenelement nach einem der Ansprüche 1 bis 9, **dadurch gekennzeichnet, dass** das Halteelement (24) eine Schwenkachse aufweist und insbesondere als Schwenkachse ausgebildet ist.

11. Fahrradrahmenelement nach einem der Ansprüche 1 bis 10, **dadurch gekennzeichnet, dass** die Schwenkachse (24) über zwei Lagerelemente gelagert ist, wobei der Schwenkhebel (26) vorzugsweise zwischen den beiden Lagerelementen angeordnet ist.

12. Fahrradrahmenelement nach einem der Ansprüche 1 bis 11, **dadurch gekennzeichnet, dass** das Halteelement (24) im Bereich eines Tretlager- und/oder Motorgehäuses angeordnet ist.

13. Fahrradrahmenelement nach einem der Ansprüche 1 bis 12, **dadurch gekennzeichnet, dass** eine Schwenkachse des Halteelements 24 zu einer Drehachse (21) des Tretlagers einen Abstand von 5 bis 15 cm, insbesondere 7 bis 12 cm aufweist.

## Claims

1. Bicycle frame element comprising
a saddle tube (10), a bottom bracket housing and/or a motor housing (12) connected to the saddle tube (10) and
chainstays (18) connected to the saddle tube (10) and/or the bottom bracket housing and/or the motor housing (12), as well as
a belt tensioning means for drive belts of a bicycle, comprising a tensioning roller (30),
a pivot lever (26) pivotally supporting the tensioning roller (30) by means of a receiving element (28),
a holding element (24) pivotally supporting the pivot lever (26), said holding element being adapted to be mounted on the bicycle frame, and
a tensioning element (32) connected to the pivot lever (26) and the bicycle frame,
wherein the tensioning element (32) is connected to the pivot element (26) between the holding element (24) and the receiving element (28),
**characterized in that**
in the mounted state, the tensioning element (32) is arranged between chainstays (18) and on the saddle tube (10) of the bicycle frame, in particular on a rear side of the saddle tube (10).

2. Bicycle frame element of claim 1, **characterized in that** the tensioning element (32) is mounted halfway between the holding element (24) and the receiving element (28), in particular with a deviation from the middle of less than ±10 mm, preferably less than ±5 mm.

3. Bicycle frame element of one of claims 1 to 2, **characterized in that** the tensioning element (32) comprises an elastic element, and is in particular designed as an elastic element.

4. Bicycle frame element of one of claims 1 to 3, **characterized in that** the tensioning element (32) comprises a spring, in particular a tension spring, the tensioning element (32) preferably being designed as a spring, in particular a tension spring.

5. Bicycle frame element of one of claims 1 to 4, **characterized in that** the tensioning element (32) is arranged on a rear side of the saddle tube (10).

6. Bicycle frame element of one of claims 1 to 5, **characterized in that** a longitudinal axis (33) of the tensioning element (32) runs substantially perpendicular to a longitudinal axis (27) of the pivot lever (26).

7. Bicycle frame element of one of claims 1 to 6, **characterized in that** the tensioning roller (30) has a circumferential recess (40) for receiving a belt.

8. Bicycle frame element of one of claims 1 to 7, **characterized in that** the receiving element (28) of the tensioning roller (30) has a roller axis (28) connected, in particular fixedly, to the pivot lever (26).

9. Bicycle frame element of one of claims 1 to 8, **characterized in that** the tensioning roller (30) is arranged laterally adjacent the pivot lever (26).

10. Bicycle frame element of one of claims 1 to 9, **characterized in that** the holding element (24) has a pivot axis and is in particular designed as a pivot axis.

11. Bicycle frame element of one of claims 1 to 10, **characterized in that** the pivot axis (24) is supported by two bearing elements, wherein the pivot lever (26) is preferably arranged between the two bearing elements.

12. Bicycle frame element of one of claims 1 to 11, **characterized in that** the holding element (24) is arranged in the area of the bottom bracket housing and/or the motor housing.

13. Bicycle frame element of one of claims 1 to 12, **characterized in that** a distance of a pivot axis of the holding element (24) to an axis of rotation (21) of the bottom bracket is 5 to 15 cm, in particular 7 to 12 cm.

## Revendications

1. Élément de cadre de bicyclette, comprenant
un tube de selle (10), un carter de pédalier et/ou de moteur (12) relié au tube de selle (10) et
des bases (18) reliées au tube de selle (10) et/ou au carter de pédalier et/ou de moteur (12), et
un dispositif de mise en tension de courroie pour une courroie d'entraînement d'une bicyclette, comprenant
un galet tendeur (30),
un levier pivotant (26) portant le galet tendeur (30) de manière rotative au moyen d'un élément récepteur (28),
un élément de retenue (24) portant le levier pivotant (26) de manière pivotante et pouvant être fixé au cadre de bicyclette, et
un élément de mise en tension (32) relié au levier pivotant (26) et au cadre de bicyclette,
l'élément de mise en tension (32) étant relié au levier pivotant (26) entre l'élément de retenue (24) et l'élément récepteur (28),
**caractérisé en ce que**,
lorsqu'il est monté, l'élément de mise en tension (32) est agencé entre des bases (18) et au tube de selle (10) pour ce qui est du cadre de bicyclette, en particulier sur une face arrière du tube de selle (10).

2. Élément de cadre de bicyclette selon la revendication 1, **caractérisé en ce que** l'élément de mise en tension (32) est fixé de manière centrale entre l'élément de retenue (24) et l'élément récepteur (28), en particulier avec un écart par rapport au centre qui est inférieur à ± 10 mm, de manière préférée inférieur à ± 5 mm.

3. Élément de cadre de bicyclette selon l'une quelconque des revendications 1 à 2, **caractérisé en ce que** l'élément de mise en tension (32) comprend un élément élastique, en particulier est réalisé sous la forme d'un élément élastique.

4. Élément de cadre de bicyclette selon l'une quelconque des revendications 1 à 3, **caractérisé en ce que** l'élément de mise en tension (32) comprend un ressort, en particulier un ressort de traction, l'élément de mise en tension (32) étant réalisé de manière préférée sous la forme d'un ressort, en particulier d'un ressort de traction.

5. Élément de cadre de bicyclette selon l'une quelconque des revendications 1 à 4, **caractérisé en ce que** l'élément de mise en tension (32) est agencé sur un côté arrière du tube de selle (10).

6. Élément de cadre de bicyclette selon l'une quelconque des revendications 1 à 5, **caractérisé en ce qu'**un axe longitudinal (33) de l'élément de mise en tension (32) s'étend de manière essentiellement perpendiculaire à un axe longitudinal (27) du levier pivotant (26).

7. Élément de cadre de bicyclette selon l'une quelconque des revendications 1 à 6, **caractérisé en ce que** le galet tendeur (30) comprend un évidement circonférentiel (40) permettant d'accueillir une courroie.

8. Élément de cadre de bicyclette selon l'une quelconque des revendications 1 à 7, **caractérisé en ce que** l'élément récepteur (28) du galet tendeur (30) comprend un axe de galet (28) en particulier relié de manière fixe au levier pivotant (26).

9. Élément de cadre de bicyclette selon l'une quelconque des revendications 1 à 8, **caractérisé en ce que** le galet tendeur (30) est agencé latéralement à côté du levier pivotant (26).

10. Élément de cadre de bicyclette selon l'une quelconque des revendications 1 à 9, **caractérisé en ce que** l'élément de retenue (24) comprend un axe de pivotement et est en particulier réalisé sous la forme d'un axe de pivotement.

11. Élément de cadre de bicyclette selon l'une quelconque des revendications 1 à 10, **caractérisé en ce que** l'axe de pivotement (24) est monté sur deux éléments de palier, le levier pivotant (26) étant agencé de manière préférée entre les deux éléments de palier.

12. Élément de cadre de bicyclette selon l'une quelconque des revendications 1 à 11, **caractérisé en ce que** l'élément de retenue (24) est agencé dans la région d'un carter de pédalier et/ou de moteur.

13. Élément de cadre de bicyclette selon l'une quelconque des revendications 1 à 12, **caractérisé en ce que**, par rapport à un axe de rotation (21) du pédalier, un axe de pivotement de l'élément de retenue (24) est à une distance comprise entre 5 et 15 cm, en particulier comprise entre 7 et 12 cm.
